(19) Europäisches Patentamt
European Patent Office
Office européen des brevets

(11) **EP 3 527 839 A1**

(12) **EUROPEAN PATENT APPLICATION**
published in accordance with Art. 153(4) EPC

(43) Date of publication:
**21.08.2019 Bulletin 2019/34**

(21) Application number: **17861834.4**

(22) Date of filing: **29.09.2017**

(51) Int Cl.:
**F16C 33/41** (2006.01)    **F16C 19/18** (2006.01)

(86) International application number:
**PCT/JP2017/035688**

(87) International publication number:
**WO 2018/074199 (26.04.2018 Gazette 2018/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **17.10.2016 JP 2016203371**

(71) Applicant: **NSK Ltd.**
**Tokyo 141-8560 (JP)**

(72) Inventors:
• **SAKURAI Masahiro**
**Fujisawa-shi**
**Kanagawa 251-8501 (JP)**
• **KATSUNO Yoshiaki**
**Fujisawa-shi**
**Kanagawa 251-8501 (JP)**

(74) Representative: **Grünecker Patent- und**
**Rechtsanwälte**
**PartG mbB**
**Leopoldstraße 4**
**80802 München (DE)**

(54) **RETAINER FOR ANGULAR BALL BEARINGS**

(57)    This retainer for angular ball bearings comprises: an annular section; and a plurality of columns extending while tilting radially outward. A plurality of pockets are formed by the annular section and pairs of circumferentially adjacent columns. The pocket inner surfaces of the pockets are constituted of pocket spherical surfaces and pocket circular cylindrical surfaces. The outer peripheries of the columns have formed thereon protrusions protruding radially outward, and the protrusions have circumferential protrusions which protrude circumferentially to prevent balls from becoming dislodged.

FIG.5

## Description

## TECHNICAL FIELD

The present invention relates to an angular contact ball bearing cage, an angular contact ball bearing, and a bearing apparatus.

## BACKGROUND ART

In a spindle of a machine tool, in particular, in a spindle that is applied with a large axial load, an angular contact ball bearing (bearing inner diameter dimension corresponding to φ 40 mm to φ 400 mm) is adopted. Further, a ball screw for converting rotary motion into linear motion is used in a linear motion feed mechanism of a spindle head or a bed for mounting a workpiece of: a machine tool such as an NC lathe, a milling machine, a machining center, a combined processing machine, or a five-axis processing machine; an electric injection molding machine; a punching press machine; and the like. As a bearing for rotatably supporting a shaft end of the ball screw, an angular contact ball bearing (bearing inner diameter dimension corresponding to φ 15 mm to φ 200 mm) is employed as well (see, for example, Patent Documents 1 and 2).

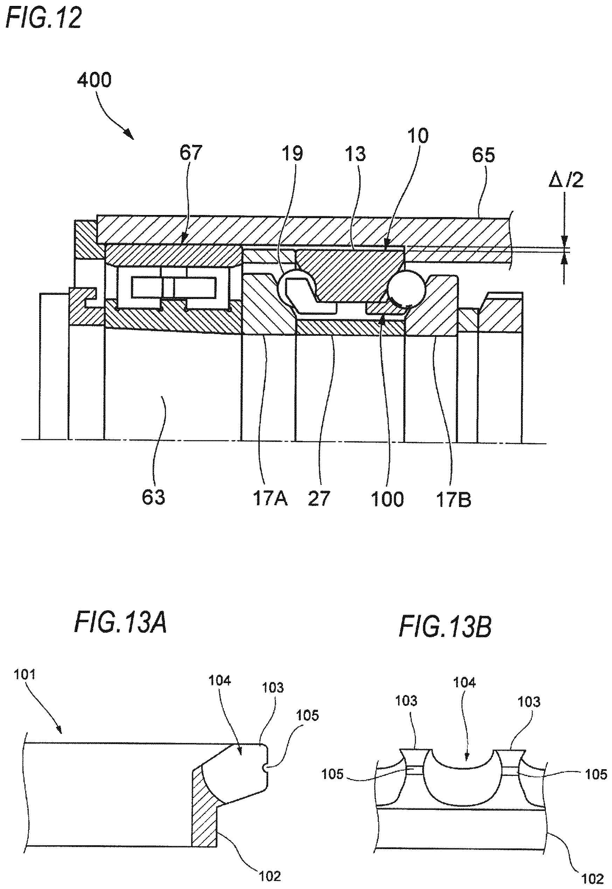

An angular contact ball bearing includes a crown cage. A conventional crown cage 101 shown in FIG. 13A includes an annular portion 102 and a plurality of columnar portions 103 being disposed on the annular portion 102 at an interval in a circumferential direction and extending obliquely and radially outward. In the crown cage 101, as shown in FIG. 13B, a plurality of pockets 104 for respectively holding balls are defined by a pair of the columnar portions 103 adjacent to each other in the circumferential direction and the annular portion 102. In the crown cage 101, a roll crimp jig (not shown) is disposed at pocket opening portions 105 to apply a load to and plastically deform the columnar portions 103, so that plastic deformation portions for preventing the balls from falling off are provided to protrude from the pocket opening portions 105 in the circumferential direction.

## CITATION LIST

## PATENT DOCUMENT

Patent Document 1: JP-A-2000-104742
Patent Document 2: JP-A-2003-166551

## SUMMARY OF INVENTION

## TECHNICAL PROBLEM

However, the above-described conventional processing method including plastic deformation is a manual work and requires a skilled technique. For this reason, it is often observed that an amount of protrusion varies depending on operating conditions. Depending on a degree of roll crimping, an amount of protrusion of the plastic deformation portion may be insufficient, which may cause the ball to fall off. In addition, an excessive amount of protrusion may cause an insertion damage to the ball or the pocket opening during ball insertion. Further, since a rigidity of the crown cage 101 is lower than that of a double-ring machined cage, depending on a plastic deformation load upon roll crimping, the annular portion 102 may be deformed elliptically, the columnar portions 103 may be deformed non-uniformly, or the pocket opening may be opened due to plastic deformation, which may cause a problem of ball falling off.

The present invention has been made in view of the above circumstances, and an object thereof is to provide an angular contact ball bearing cage, an angular contact ball bearing, and a bearing apparatus, which can prevent insertion damage of balls or pocket openings upon ball insertion and prevent the balls from falling off.

## SOLUTION TO PROBLEM

The present invention provides the following configurations.

(1) An angular contact ball bearing cage includes:

an annular portion; and
a plurality of columnar portions being formed on one axial side of the annular portion at an interval in a circumferential direction and extending obliquely and radially outward,
wherein a plurality of pockets are defined by a pair of the columnar portions adjacent to each other in the circumferential direction and the annular portion, and each of the pockets is configured to hold a ball,
wherein a pocket inner surface of each of the pockets includes a pocket spherical surface formed of a part of a spherical surface and a pocket cylindrical surface formed of a part of a cylindrical surface,
wherein an outer circumferential portion of each of the columnar portions is formed with a convex portion protruding radially outward, and
wherein the convex portion has a circumferential protrusion protruding in the circumferential direction to prevent the ball from falling off.

(2) In the angular contact ball bearing cage according to (1), a circumferential surface of the circumferential protrusion is a projecting cylindrical surface having a cylindrical shape.

(3) In the angular contact ball bearing cage according to (1) or (2), the convex portion has an axial thickness decreasing toward a tip end thereof.

(4) In the angular contact ball bearing cage according to any one of (1) to (3),
the convex portion has a convex portion tip end surface which is an outermost circumferential portion thereof, and a pair of convex portion inclined surfaces connecting an outer circumferential surface of the columnar portion and the convex portion tip end surface, and
when $\theta_2$ represents an angle at which the pair of convex portion inclined surfaces intersect with each other, W represents a base width of the convex portion in an axial direction, and Da represents a diameter of the ball, the following relationships are satisfied.

$$0 < \theta_2 < 120°,$$

and

$$0.1 < W/Da < 1$$

(5) In the angular contact ball bearing cage according to any one of (1) to (4),
the pocket cylindrical surface is formed to have an axis passing through a center of the pocket spherical surface, and
when R represents a radius of curvature of the pocket spherical surface, $\varphi Dp1$ represents a diameter of the pocket cylindrical surface, and Da represents a diameter of the ball, the following relationships are satisfied.

$$0.5 < R/Da < 0.65,$$

and

$$\varphi Dp1 = 2R$$

(6) In the angular contact ball bearing cage according to any one of (1) to (4),
the pocket cylindrical surface is formed from a position displaced from a center of the pocket spherical surface toward the annular portion, and when R represents a radius of curvature of the pocket spherical surface, $\varphi Dp1$ represents a diameter of the pocket cylindrical surface, and Da represents a diameter of the ball, the following relationships are satisfied.

$$0.5 < R/Da < 0.65,$$

and

$$\varphi Dp1 < 2R$$

(7) In the angular contact ball bearing cage according to any one of (1) to (6),
wherein when $\theta_3$ represents an angle formed by an outer circumferential side inclined surface and an inner circumferential side inclined surface of the columnar portion in an axial cross section, the following relationship is satisfied.

$$\theta_3 \geq 0°$$

(8) The angular contact ball bearing cage according to any one of (1) to (7) is a ball guidance type.
(9) The angular contact ball bearing cage according to any one of (1) to (7) is an inner ring guidance type or an outer ring guidance type.
(10) An angular contact ball bearing includes:

> an outer ring having an outer ring raceway groove on an inner circumferential surface thereof;
> an inner ring having an inner ring raceway groove on an outer circumferential surface thereof;
> a plurality of balls provided rotatably with a contact angle between the outer ring raceway groove and the inner ring raceway groove; and
> the angular contact ball bearing cage according to any one of (1) to (9).

(11) A bearing apparatus includes the angular contact ball bearing according to (10) and a cylindrical roller bearing which are provided in a housing concentrically with each other,
wherein an outer ring outer circumferential surface of the cylindrical roller bearing is supported by an inner circumferential surface of the housing, and
wherein a diameter gap of 20 $\mu$m or more is provided between the outer ring outer circumferential surface of the angular contact ball bearing and the inner circumferential surface of the housing.

## ADVANTAGEOUS EFFECTS OF INVENTION

According to the angular contact ball bearing cage and the angular contact ball bearing according to the present invention, it is possible to prevent an insertion damage of balls or pocket openings upon ball insertion and prevent the balls from falling off.
According to the bearing apparatus of the present invention, it is possible to share a radial load and an axial load with a cylindrical roller bearing and an angular contact ball bearing.

## BRIEF DESCRIPTION OF DRAWINGS

FIG. 1 is a cross-sectional view of an angular contact ball bearing according to a first configuration example.
FIG. 2 is an external perspective view of the angular contact ball bearing cage of FIG. 1.
FIG. 3 is a cross-sectional view taken along a plane including an axis of the angular contact ball bearing cage shown in FIG. 2.
FIG. 4 is a cross-sectional view taken along line A-A of FIG. 1.
FIG. 5 is an enlarged perspective view of a columnar portion.
FIG. 6 is a view seen from a direction of arrow V in FIG. 3.
FIG. 7 is a radial cross-sectional view of an angular contact ball bearing according to a second configuration example.
FIGS. 8A, 8B and 8C are respectively enlarged views showing main parts according to configuration examples of a circumferential protrusion in a convex portion.
FIG. 9 is a perspective view in the same direction as FIG. 3 of an angular contact ball bearing cage according to a third configuration example.
FIG. 10 is an enlarged cross-sectional view of a main part of an angular contact ball bearing using an angular contact ball bearing cage of an inner ring guidance type.
FIG. 11 is an enlarged cross-sectional view of a main part of an angular contact ball bearing using an angular contact ball bearing cage of a ball guidance type.
FIG. 12 is a cross-sectional view showing an example in which the angular contact ball bearing of FIG. 1 is applied to a cutter side bearing of a machine tool spindle which is a bearing apparatus.
FIG. 13A is a cross-sectional view of a main part of a conventional crown cage, and FIG. 13B is a right-side view thereof.

## DESCRIPTION OF EMBODIMENTS

Hereinafter, embodiments of the present invention will be described in detail with reference to the drawings.

(First Configuration Example)

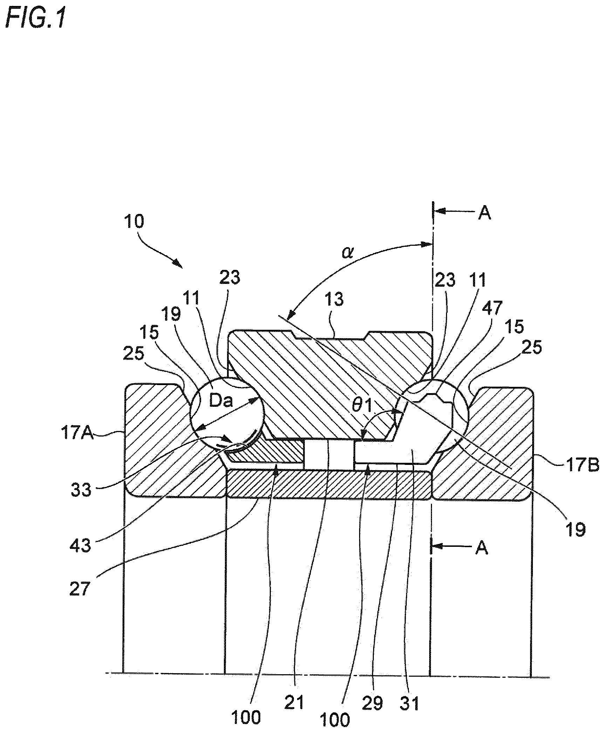

FIG. 1 is a cross-sectional view of an angular contact ball bearing according to a first configuration example.
The angular contact ball bearing 10 of the present configuration is a double-row angular contact ball bearing including: a double-row outer ring 13 having double outer ring raceway grooves 11 on an inner circumferential surface thereof; a pair of inner rings 17A, 17B each having a single inner ring raceway groove 15 on an outer circumferential surface thereof; a plurality of balls 19 respectively disposed between the outer ring raceway grooves 11 and the inner ring raceway grooves 15; and a pair of angular contact ball bearing cages 100 of an outer ring guidance type. The angular contact ball bearing 10 is a double-row bearing with back-to-back arrangement whose contact angle $\alpha$ is set to about $40°\leq\alpha\leq60°$.
A guide surface 21 of each of the angular contact ball bearing cages 100 is formed on an axially intermediate portion of the inner circumferential surface of the double-row outer ring 13. A pair of outer ring inclined surfaces 23 extending radially outward are formed on both axial sides of the guide surface 21, and the outer ring raceway grooves 11 are formed on the outer ring inclined surfaces 23, respectively.
Each of the pair of inner rings 17A, 17B has an inner ring inclined surface 25 that faces the outer ring inclined surface 23 substantially in parallel, and the inner ring raceway grooves 15 are formed on the inner ring inclined surface 25, respectively. An inner ring spacer 27 having an axial width approximately equal to that of the double-row outer ring 13 is disposed between the pair of inner rings 17A, 17B. The axial width of the inner ring spacer 27 may differ from the axial width of the double-row outer ring 13 as needed.
In the angular contact ball bearing 10 of the present configuration, high groove shoulders are formed on an axially inner side of the double-row outer ring 13 and axially outer sides of each of the inner rings 17A, 17B. As a result, a high axial load can be applied.
Next, a configuration of the angular contact ball bearing cage (hereinafter, simply referred to as "cage" as appropriate) 100 will be described in detail.
The cage 100 is formed of a metal material or a synthetic resin material.
Examples of the metal material include a copper alloy, iron, aluminum, magnesium, and the like. In a case of an iron-based material, a silver plating and the like may be applied thereon.
Examples of the synthetic resin material include polyamide, polyacetal, polyether ether ketone, polyimide, polyphenylene sulfide, and the like. A reinforcing material such as a glass fiber, a carbon fiber, and an aramid fiber may be added as needed.

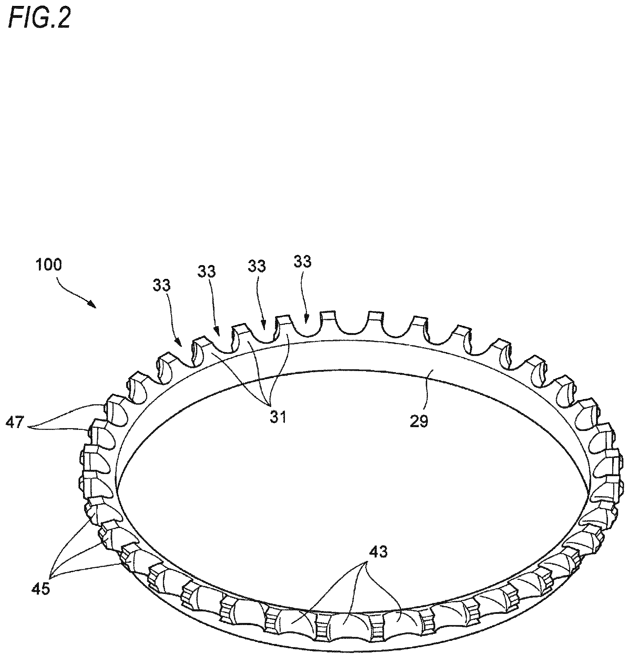

FIG. 2 is an external perspective view of the cage 100 of FIG. 1.
The cage 100 includes an annular portion 29 and a plurality of columnar portions 31 being formed on one axial side of the annular portion 29 at an interval in a circumferential direction and extending obliquely and radially outward. The annular portion 29 is arranged on an axially inner side of the angular contact ball bearing 10 (see FIG. 1), and the columnar portions 31 are arranged on an axially outer side thereof. A plurality of pockets 33 for respectively holding the balls 19 are defined by pairs of columnar portions 31 adjacent in the circumferential direction and the annular portion 29. A number of the pockets 33 may be any number without being limited to the illustrated example.

As shown in FIG. 1, in the angular contact ball bearing 10, groove shoulders of the inner ring 17A, 17B on a side not having a contact angle are removed, and the annular portion 29 and the inner ring spacer 27 are disposed in this part, so as to bear a high axial load. Therefore, a shape of the cage 100 is a crown shape in which the plurality of columnar portions 31 are inclined outward in a width direction from the radial direction so as to avoid interference with the groove shoulders of the inner and outer rings.

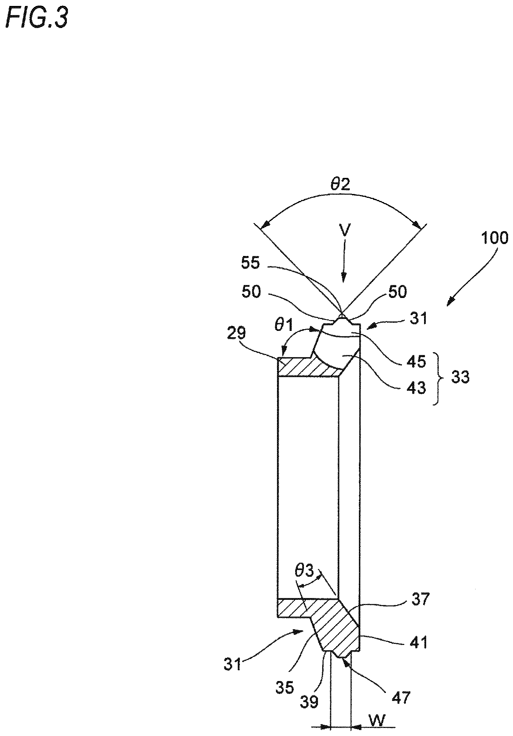

FIG. 3 is a schematic cross-sectional view taken along a plane including an axis of the angular contact ball bearing cage 100 shown in FIG. 2.

Each of the columnar portions 31 has an outer circumferential side inclined surface 35 connected to the outer circumferential surface of the annular portion 29, an inner circumferential side inclined surface 37 connected to the inner circumferential surface, an outer circumferential surface 39 being connected to the outer circumferential side inclined surface 35 and extending in the axial direction, and an axial tip end surface 41 being connected to the outer circumferential surface 39 and the inner circumferential side inclined surface 37 and extending in the radial direction.

A convex portion 47 protruding radially outward is formed on the outer circumferential surface 39 of the columnar portion 31. The convex portion 47 has a convex portion tip end surface 55 which is an outermost circumferential portion thereof, and a pair of convex portion inclined surfaces 50 connecting the outer circumferential surface 39 of the columnar portion 31 and the convex portion tip end surface 55 in the axial direction. The convex portion inclined surfaces 50 are formed such that the convex portion 47 has an axial thickness decreasing toward a tip end thereof.

A pocket inner surface of the pocket 33 includes a pocket spherical surface 43 formed of a part of a spherical surface, and a pocket cylindrical surface 45 connected to the pocket spherical surface 43 and formed of a part of a cylindrical surface.

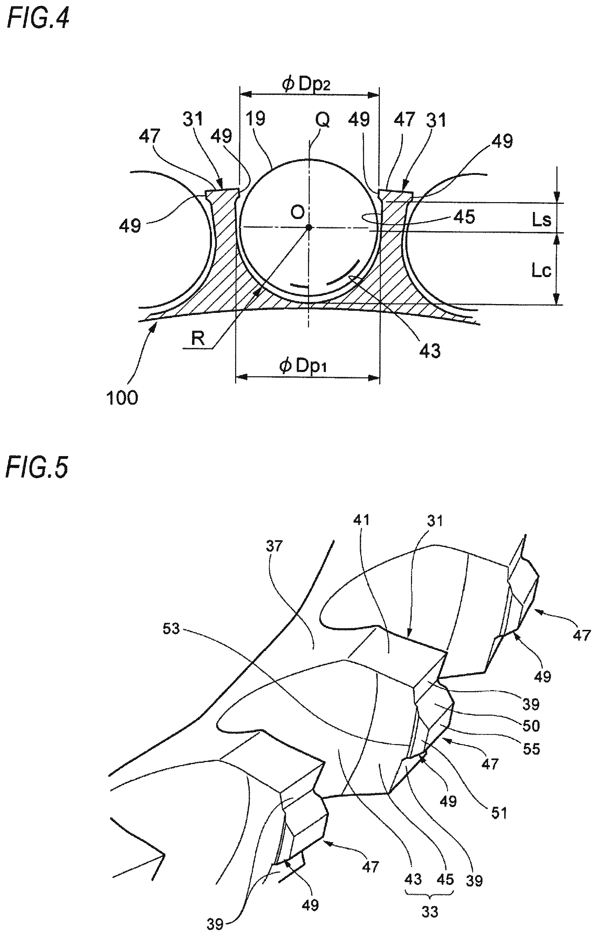

FIG. 4 is a cross-sectional view taken along line A-A of FIG. 1.

The pocket cylindrical surface 45 of the cage 100 is formed such that an axis Q of the pocket cylindrical surface 45 passes through a center O of the spherical surface. In the illustrated example, Lc represents a height of the pocket spherical surface 43 from a pocket bottom portion, and Ls represents a height of the pocket cylindrical surface 45 from a border between the pocket spherical surface 43 and the pocket cylindrical surface 45. In the present configuration, the height Lc of the pocket spherical surface 43 is a half value of a diameter $\varphi Dp1$ of the pocket cylindrical surface 45.

Circumferential protrusions 49 protruding in the circumferential direction are formed on the convex portion 47 on the outer circumferential portion of the columnar portion 31. The circumferential protrusions 49 are formed on both circumferential sides of the convex portion 47 to respectively prevent the balls 19 from falling off.

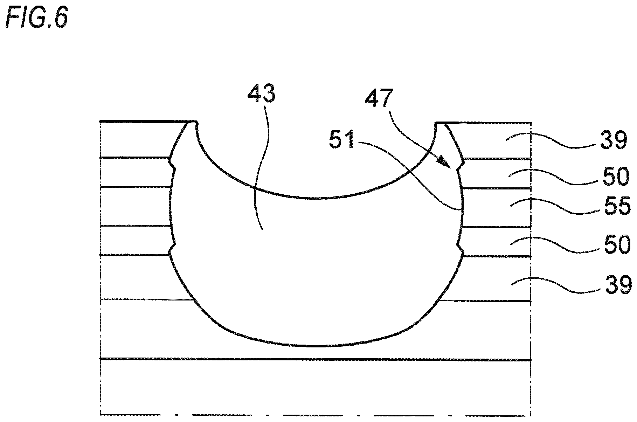

Here, a shape of the tip end portion of the columnar portion 31 will be described in more detail. FIG. 5 is an enlarged perspective view of the columnar portion 31, and FIG. 6 is a view seen from a direction of arrow V in FIG. 3.

The circumferential protrusions 49 are formed at both circumferential end portions of the convex portion 47 which is the cage outermost circumferential portion of the columnar portion 31 so as to protrude in directions that narrow the pocket cylindrical surface 45. The circumferential protrusions 49 and the pocket cylindrical surface 45 are connected via tapered portions 53. Circumferential surfaces of the circumferential protrusions 49 are projecting cylindrical surfaces 51 formed into a cylindrical shape.

By forming the projecting cylindrical surfaces 51 into a cylindrical shape, when inserting the balls into the pockets, positioning to the opening portion of the projecting cylindrical surfaces 51 is ensured, and the ball can be easily inserted without being displaced.

The convex portion 47 in the illustrated example has a trapezoidal shape in an axial cross section, but may also be a curved surface curved along the axial direction or a rectangular shape protruding in a direction substantially perpendicular to the radial direction, as needed. Alternatively, instead of one protrusion, a plurality of protrusions may be formed in the axial direction.

In the cage 100 configured as described above, the cage shape is manufactured by precision machining. Therefore, the convex portion 47 and the circumferential protrusions 49 are manufactured without depending on manual work that requires a skilled technique, which prevents variation in an amount of protrusion due to the operating conditions generated in the case of manual work. Therefore, it is possible to prevent the balls from falling off due to insufficient protrusion and to prevent occurrence of insertion damage occurring to the balls or the pocket openings upon ball insertion due to excessive protrusion.

Since the convex portions 47 and the circumferential protrusions 49 are manufactured by precision machining, a load causing plastic deformation as upon roll crimping is not applied to the cage 100. Therefore, the annular portion 29 (see FIG. 3) is not deformed into an elliptical shape, and the columnar portions 31 are not deformed non-uniformly. As a result, the pocket openings can be prevented from opening due to plastic deformation, and the balls can be prevented from falling off.

As shown in FIG. 3, when $\theta_1$ represents an inclination angle of the columnar portion 31 with respect to an axis of the annular portion 29, that is, an inclination angle of the outer circumferential side inclined surface 35 of the columnar portion 31 with respect to the axis of the annular portion 29, the cage 100 of the present configuration satisfies the following formula (1).

$$\theta_1 > 90° \ ... \ (1)$$

As shown in FIGS. 1, 3, and 4, the cage 100 preferably satisfies the following formula (2) when R represents a radius of curvature of the pocket spherical surface 43 and Da represents a diameter of the ball 19.

$$0.5 < R/Da < 0.65 \ ... \ (2)$$

By satisfying the formula (1), the cage 100 of the present configuration can secure a cross-sectional thickness of the cage 100 while preventing contact between the double-row outer ring 13 and the inner rings 17A, 17B. In addition, by satisfying the formula (2), the cage 100 of the present configuration can be configured to have low heat generation, in which the balls 19 and the pockets 33 are in smooth contact with each other to reduce friction.

As shown in FIG. 3, when $\theta_2$ represents an angle at which the pair of convex portion inclined surfaces 50 intersect with each other, and W represents a base width of the convex portion 47 in the axial direction, that is, a width on a radial inner side between the pair of convex portion inclined surfaces 50, the cage 100 of the present configuration preferably satisfies the following formulae (3) and (4).

$$0° < \theta_2 < 120° \ ... \ (3)$$

$$0.1 < W/Da < 1 \ ... \ (4)$$

By satisfying the formulae (3) and (4), the cage 100 can have a reduced volume of a pocket outlet portion and reduced insertion force and pull-out force when the balls 19 are placed into the pockets. Accordingly, it is possible to obtain an appropriate cage shape in which damages such as ball flaw are unlikely to occur and the balls 19 do not easily fall off.

Further, as shown in FIG. 4, when $\varphi Dp1$ represents a diameter of the pocket cylindrical surface 45, the cage 100 of the present configuration preferably satisfies the above formula (2) and the following formula (5).

$$\varphi Dp1 = 2R \text{ or } \varphi Dp1 < 2R \ ... \ (5)$$

By satisfying the formulae (2) and (5), the cage 100 of the present configuration is configured to have low heat generation, in which that the balls 19 and the pockets 33 are in smooth contact with each other to reduce friction.

As shown in FIG. 3, when $\theta_3$ represents an angle formed by the outer circumferential side inclined surface 35 and the inner circumferential side inclined surface 37 in an axial cross section of the columnar portion 31, the cage 100 of the present configuration preferably satisfies the following formula (6).

$$\theta_3 \geq 0° \ ... \ (6)$$

By satisfying the formula (6), the cage 100 can have an increased tip end portion thickness and an increased strength of the columnar portion 31. In addition, by holding the entire ball in a wide range, an axial gap between the pocket spherical surface 43 and the ball 19 can be set to an appropriate small amount of movement. As a result, acoustic characteristics are improved. If the formula (6) is not satisfied, an amount of movement in the width direction of the cage may be large, and the cage may come into contact with the double-row outer ring 13.

As shown in FIG. 4, when $\varphi Dp2$ represents a diameter of the projecting cylindrical surfaces 51 of the convex portion 47, in a case where a cage material is a metal material, the following formula (7), more desirably the formula (8), is preferably satisfied.

$$0.60 < Dp2/Da < 1 \ ... \ (7)$$

$$0.95 < Dp2/Da < 0.99 \ ... \ (8)$$

On the other hand, in a case where the cage material is a resin material, the above formula (7), more desirably the following formula (9), is preferably satisfied.

$$0.86 < Dp2/Da < 0.94 \ ... \ (9)$$

In the cage 100, by satisfying the formula (7) or (8) in a case where the cage material is a metal material, and satisfying the formula (9) in a case where the cage material is a resin material, the pocket outlet diameter (the diameter $\varphi Dp2$ of the projecting cylindrical surfaces 51) is smaller than the diameter of the ball, so that the ball 19 can be prevented from falling off.

An example of the shape of the cage of the cage 100 can be set such that $\theta_1=110°$, $\theta_2=90°$, $\theta_3=15°$, Dp2/Dp1=0.95, Dp2/Da=0.96, and Dp1=2R, respectively.

(Second configuration example)

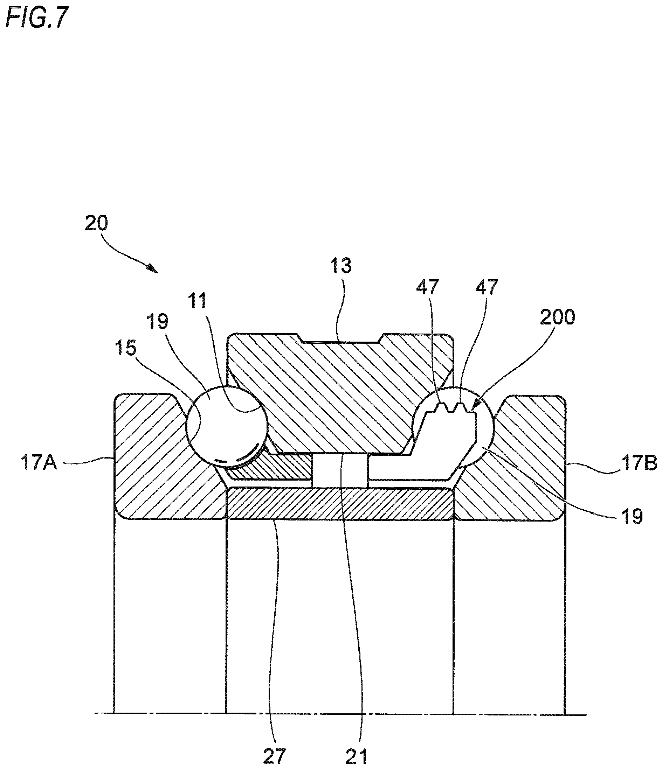

FIG. 7 is a radial cross-sectional view of an angular contact ball bearing according to a second configuration example. Parts that are same as or equivalent to those of the first configuration example are denoted by the same reference numerals, and the description thereof is omitted or simplified.

The angular contact ball bearing 20 of the present configuration includes an angular contact ball bearing cage 200 in which two convex portions 47 are formed on the outer circumferential surface 39. The two convex portions 47 are arranged on the outer circumferential surface 39 in parallel in a direction along a rotation axis of the angular contact ball bearing 20.

According to the angular contact ball bearing 20 and the angular contact ball bearing cage 200, a number of the circumferential protrusions 49 on the pocket surface increases, and thus the effect of preventing the balls 19 from falling off is enhanced. In addition, the insertion force of the balls 19 can be reduced while maintaining the falling-off preventing function.

(Modification of convex portion)

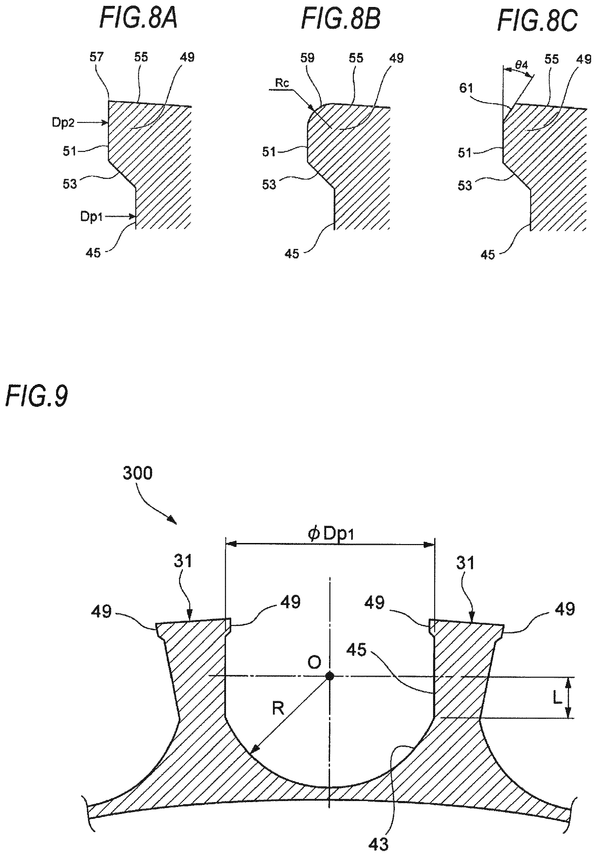

FIGS. 8A, 8B and 8C are respectively enlarged views showing main parts of configuration examples of the circumferential protrusions 49 in the convex portion 47.

Each of the circumferential protrusions 49 connected to the inner surface of the pocket via the tapered portion 53 may have various shapes of a corner portion between the projecting cylindrical surface 51 and the convex tip end surface 55. For example, as shown in FIG. 8A, the corner portion may have an edge 57 remained. As shown in FIG. 8B, the corner portion may be chamfered on an R surface 59 of a radius Rc. Further, as shown in FIG. 8C, the corner portion may be chamfered into by an inclined surface 61 having an inclination angle $\theta_4$.

According to the cage including the edge 57 at the corner, the cage can be easily manufactured. According to the cage including the R surface 59 and the inclined surface 61 at the corner, insertion workability of the balls 19 is improved.

(Third configuration example)

FIG. 9 is a perspective view in the same direction as FIG. 3 of an angular contact ball bearing cage 300 according to a third configuration example.

In the cage 300 of the present configuration, the pocket cylindrical surface 45 is formed at a position displaced from the center O of the spherical surface toward the annular portion (a lower side in FIG. 9), and the relationship between the diameter φDp1 of the pocket cylindrical surface 45 and the radius of curvature R of the pocket spherical surface 43 satisfies φDp1<2R.

In the cage 300 of the present configuration, the pocket cylindrical surface 45 is formed at the position displaced from the center O of the spherical surface toward the annular portion. That is, a start portion of the pocket cylindrical surface 45 is displaced by a displacement amount L (L>0) from an equator of the pocket spherical surface 43.

The cage 300 is capable of maintaining holding of the ball 19 on the spherical surface and maintaining stable rotation conditions. In order to secure the holding of the balls 19 and maintain stable rotation conditions, the displacement amount L is preferably L/Da≤0.25.

As described above, the present invention is not limited to the above-mentioned embodiment, but modifications and applications made by one skilled in the art based on mutual combination of the configurations of the embodiments, description in the specification, and well-known art, is within the scope and protection of the present invention.

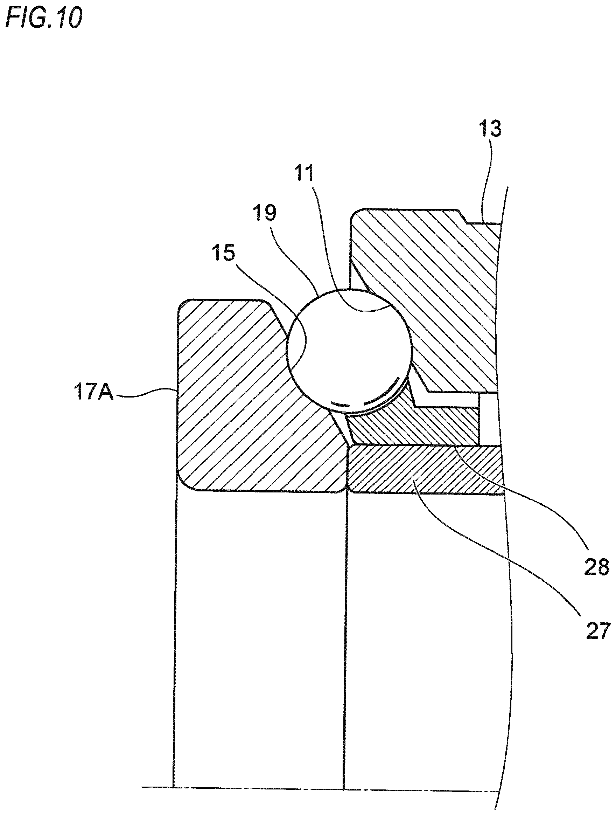

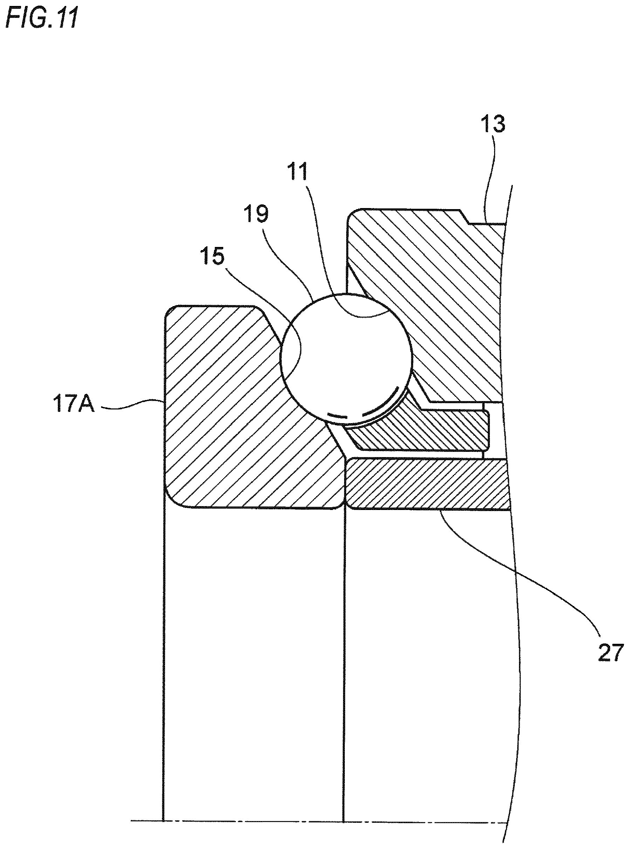

For example, the angular contact ball bearing cage is not limited to the outer ring guidance type of the illustrated example, and may also be an inner ring guidance type in which the inner circumferential surface 28 is guided by the inner ring spacer 27 as shown in FIG. 10, or a ball guidance type guided by the balls 19 as shown in FIG. 11.

The angular contact ball bearing cage of each of the above structural examples is used to a double-row angular contact ball bearing, but may also be used to a single-row angular contact ball bearing.

FIG. 12 is a cross-sectional view showing an example in which the angular contact ball bearing 10 with a back-to-back arrangement of FIG. 1 is applied to a cutter side bearing of a machine tool spindle 400 which is a bearing apparatus.

For example, in a spindle arrangement optimal for a machine tool spindle 400 to which a large axial load is applied during cutting process, such as a boring machine or a lathe, as a cutter side bearing of the machine tool spindle, a double-row cylindrical roller bearing 67 and the angular contact ball bearing 10 with a back-to-back arrangement are disposed between a rotary shaft 63 and a housing 65 concentrically with each other.

In this case, an outer ring outer circumferential surface of the double-row cylindrical roller bearing 67 is supported by an inner circumferential surface of the housing 65, and a diameter gap Δ of 20 μm or more is formed between the outer circumferential surface of the double-row outer ring 13 of the angular contact ball bearing 10 and the inner circumferential surface of the housing 65. When the diameter gap Δ is less than 20 μm, there is a possibility that the machine tool spindle 400 is bent due to a cutting load and the like, the double-row outer ring 13 and the housing 65 are in contact with each other, and a radial load is applied to the angular contact ball bearing 10. Therefore, the diameter gap Δ is set to 20 μm or more. It is desirable that the diameter gap Δ is about 20 μm to 500 μm.

As a result, the radial load is applied by the double-row cylindrical roller bearing, and the axial load is applied by the angular contact ball bearing 10. If both the radial load and the axial load are bore by the angular contact ball bearing 10, a life of the angular contact ball bearing 10 is reduced, whereas a bearing life of the double-row cylindrical roller bearing is greatly increased with respect to the angular contact ball bearing 10. On the other hand, as in the present example, by performing load sharing in which the radial load is bore with the double-row cylindrical roller bearing and the axial load is bore with the angular contact ball bearing 10, the bearing lives can be balanced among both bearings. The double-row cylindrical roller bearing of the present example may also be a single-row cylindrical roller bearing.

According to the angular contact ball bearing cage and the angular contact ball bearing of the present configuration, it is possible to prevent an insertion damage of balls or pocket openings upon ball insertion and prevent the balls from falling off.

According to the bearing apparatus of the present invention, since the above angular contact ball bearing and cylindrical roller bearing are combined, and a diameter gap of 20 $\mu$m or more is formed between the outer circumferential surface of the double-row outer ring 13 of the angular contact ball bearing and the inner circumferential surface of the housing 65, it is possible to share the radial load and the axial load with the cylindrical roller bearing and the angular contact ball bearing.

The present application is based on Japanese Patent Application No. 2016-203371 filed on October 17, 2016, contents of which are incorporated herein as reference.

REFERENCE SIGNS LIST

| 10 | Angular contact ball bearing |
|---|---|
| 11 | Outer ring raceway groove |
| 15 | Inner ring raceway groove |
| 17A, 17B | Inner ring |
| 19 | Ball |
| 29 | Annular portion |
| 31 | Columnar portion |
| 33 | Pocket |
| 43 | Pocket spherical surface |
| 45 | Pocket cylindrical surface |
| 47 | Convex portion |
| 49 | Circumferential protrusion |
| 65 | Housing |
| 100, 200, 300 | Angular contact ball bearing cage |
| 400 | Machine tool spindle (bearing apparatus) |

**Claims**

1. An angular contact ball bearing cage comprising:

    an annular portion; and
    a plurality of columnar portions being formed on one axial side of the annular portion at an interval in a circumferential direction and extending obliquely and radially outward,
    wherein a plurality of pockets are defined by a pair of the columnar portions adjacent to each other in the circumferential direction and the annular portion, and each of the pockets is configured to hold a ball,
    wherein a pocket inner surface of each of the pockets includes a pocket spherical surface formed of a part of a spherical surface and a pocket cylindrical surface formed of a part of a cylindrical surface,
    wherein an outer circumferential portion of each of the columnar portions is formed with a convex portion protruding radially outward, and
    wherein the convex portion has a circumferential protrusion protruding in the circumferential direction to prevent the ball from falling off.

2. The angular contact ball bearing cage according to claim 1,
    wherein a circumferential surface of the circumferential protrusion is a projecting cylindrical surface having a cylindrical shape.

3. The angular contact ball bearing cage according to claim 1 or 2,
    wherein the convex portion has an axial thickness decreasing toward a tip end thereof.

4. The angular contact ball bearing cage according to any one of claims 1 to 3,
    wherein the convex portion has a convex portion tip end surface which is an outermost circumferential portion thereof, and a pair of convex portion inclined surfaces connecting an outer circumferential surface of the columnar portion and the convex portion tip end surface, and
    wherein when $\theta_2$ represents an angle at which the pair of convex portion inclined surfaces intersect with each other, W represents a base width of the convex portion in an axial direction, and Da represents a diameter of the ball, the following relationships are satisfied.

$$0 < \theta_2 < 120°,$$

and

$$0.1 < W/Da < 1$$

5. The angular contact ball bearing cage according to any one of claims 1 to 4,
    wherein the pocket cylindrical surface is formed to have an axis passing through a center of the pocket spherical surface, and
wherein when R represents a radius of curvature of the pocket spherical surface, φDp1 represents a diameter of the pocket cylindrical surface, and Da represents a diameter of the ball, the following relationships are satisfied.

$$0.5<R/Da<0.65,$$

and

$$\varphi Dp1=2R$$

6. The angular contact ball bearing cage according to any one of claims 1 to 4,
wherein the pocket cylindrical surface is formed from a position displaced from a center of the pocket spherical surface toward the annular portion, and when R represents a radius of curvature of the pocket spherical surface, φDp1 represents a diameter of the pocket cylindrical surface, and Da represents a diameter of the ball, the following relationships are satisfied.

$$0.5<R/Da<0.65,$$

and

$$\varphi Dp1<2R$$

7. The angular contact ball bearing cage according to any one of claims 1 to 6,
wherein when $\theta_3$ represents an angle formed by an outer circumferential side inclined surface and an inner circumferential side inclined surface of the columnar portion in an axial cross section, the following relationship is satisfied.

$$\theta_3 \geq 0°$$

8. The angular contact ball bearing cage according to any one of claims 1 to 7, which is a ball guidance type.

9. The angular contact ball bearing cage according to any one of claims 1 to 7, which is an inner ring guidance type or an outer ring guidance type.

10. An angular contact ball bearing comprising:

an outer ring having an outer ring raceway groove on an inner circumferential surface thereof;

an inner ring having an inner ring raceway groove on an outer circumferential surface thereof;

a plurality of balls provided rotatably with a contact angle between the outer ring raceway groove and the inner ring raceway groove; and

the angular contact ball bearing cage according to any one of claims 1 to 9.

11. A bearing apparatus comprising: the angular contact ball bearing according to claim 10 and a cylindrical roller bearing which are provided in a housing concentrically with each other,
wherein an outer ring outer circumferential surface of the cylindrical roller bearing is supported by an inner circumferential surface of the housing, and wherein a diameter gap of 20 μm or more is provided between the outer ring outer circumferential surface of the angular contact ball bearing and the inner circumferential surface of the housing.

## FIG.1

FIG.2

*FIG.3*

FIG.4

FIG.5

FIG.6

FIG.7

*FIG.8A*  *FIG.8B*  *FIG.8C*

*FIG.9*

*FIG.10*

FIG.11

FIG.12

FIG.13A

FIG.13B

## INTERNATIONAL SEARCH REPORT

| International application No. |
| --- |
| PCT/JP2017/035688 |

**A. CLASSIFICATION OF SUBJECT MATTER**
Int.Cl. F16C33/41(2006.01)i, F16C19/18(2006.01)i

According to International Patent Classification (IPC) or to both national classification and IPC

**B. FIELDS SEARCHED**

Minimum documentation searched (classification system followed by classification symbols)
Int.Cl. F16C33/41, F16C19/18

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2017 |
| Registered utility model specifications of Japan | 1996–2017 |
| Published registered utility model specifications of Japan | 1994–2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2008-224026 A (NSK LTD.) 25 September 2008, paragraphs [0034]-[0035], [0042], fig. 1-2, 6 (Family: none) | 1-11 |
| Y | JP 2014-169777 A (NSK LTD.) 18 September 2014, paragraphs [0023]-[0024], [0028], fig. 1 (Family: none) | 1-11 |

☒ Further documents are listed in the continuation of Box C.  ☐ See patent family annex.

| | |
| --- | --- |
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| 14 December 2017 (14.12.2017) | 26 December 2017 (26.12.2017) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2017/035688

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2014-77508 A (NTN CORPORATION) 01 May 2014, paragraphs [0018]-[0019], fig. 1, 4 (Family: none) | 1-11 |
| Y | JP 2008-128421 A (NTN CORPORATION) 05 June 2008, paragraphs [0018]-[0019], fig. 1, 2 (Family: none) | 1-11 |
| Y | JP 55-107117 A (NSK LTD.) 16 August 1980, page 3, upper left column, line 9 to upper right column, line 5, page 3, lower right column lines 4-19, page 5, upper left column, line 15 to upper right column line 14, page 5, lower left column, line 15 to lower right column, line 17, fig. 1, 3-5, 11-13 (Family: none) | 2-11 |
| Y | WO 2016/143577 A1 (NTN CORPORATION) 15 September 2016, paragraphs [0027]-[0028], [0034], [0037], fig. 2 & JP 2016-165780 A & TW 201700210 A | 11 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000104742 A
- JP 2003166551 A

- JP 2016203371 A